**Europäisches Patentamt**

**European Patent Office**

**Office européen des brevets**

(19)

(11) Veröffentlichungsnummer: **0 015 536**
**A1**

(12) # EUROPÄISCHE PATENTANMELDUNG

(21) Anmeldenummer: **80101079.4**

(22) Anmeldetag: **04.03.80**

(51) Int. Cl.³: **E 06 B 3/26**, B 29 D 27/04

(30) Priorität: **06.03.79 DE 2908618**
**30.04.79 DE 2917579**

(43) Veröffentlichungstag der Anmeldung: **17.09.80**
**Patentblatt 80/19**

(84) Benannte Vertragsstaaten: **AT CH FR GB IT NL SE**

(71) Anmelder: **Mühle, Manfred, Tulpenstrasse 11,**
**D-4972 Löhne 2 (DE)**

(72) Erfinder: **Mühle, Manfred, Tulpenstrasse 11,**
**D-4972 Löhne 2 (DE)**

(74) Vertreter: **Hentzschel, Hans–Jürgen, Dipl.-Ing., Am**
**Hohen Ufer 8, D-4970 Bad Oeynhausen 1 (DE)**

(54) **Verfahren und Vorrichtung zum Herstellen von wärmeisolierenden Verbundprofilen sowie nach dem Verfahren hergestelltes Verbundprofil.**

(57) Bei einem Verfahren und einer Vorrichtung zum Herstellen von wärmeisolierenden Verbundprofilen wird in einen zwischen mindestens zwei Metallprofilen (1/2) vorgesehenen Freiraum (4) zunächst flüssiges und anschliessend erhärtendes Isoliermaterial (10) eingebracht, indem die Metallprofile (1/2) zur Erzielung eines auch für die Fertigung von in kleineren Stückzahlen vorkommenden Profilquerschnitten geeigneten, mit möglichst einfachen Mitteln auskommenden sowie nur geringe Kosten verursachenden Verfahrensablaufs in eine sie unter Bildung des für die Aufnahme des Isoliermaterials (10) bestimmten Freiraumes (4) abstützende Halterung (3) eingelegt werden, danach der seitlich von den Metallprofilen (1/2) begrenzte Freiraum (4) sowohl von oben her als auch an den Enden der Metallprofile (1/2) mit einem auf den Metallprofilen (1/2) selbstklebenden Abdeckstreifen (5) verschlossen und den Metallprofilen (1/2) ein rinnenförmiges Führungsprofil (7) aufgestülpt wird, im weiteren Gang des Verfahrens sodann das rinnenförmige Führungsprofil (7) mit den Metallprofilen (1/2) sowie deren Halterung (3) in der Längsachse um etwa 180° gedreht, die im Anschluss an den Drehvorgang obenliegende Halterung (3) von den Metallprofilen (1/2) abgenommen, das sich in flüssiger Form befindliche Isoliermaterial (10) in den Freiraum (4) eingebracht und das nach dem Verfahren hergestellte Verbundprofil (6) dem Führungsprofil (7) entnommen wird.

DIPL.-ING. H.-J. HENTZSCHEL
Patentingenieur
497 Bad Oeynhausen
Am Hohen Ufer 8     Telefon 29226

0015536

55/479

Manfred Mühle, Tulpenstraße 11, D-4972 Löhne 2

Verfahren und Vorrichtung zum Herstellen von wärmeisolierenden Verbundprofilen sowie nach dem Verfahren
hergestelltes Verbundprofil

Die Erfindung betrifft ein Verfahren und eine Vorrichtung zum Herstellen von wärmeisolierenden Verbundprofilen, bestehend aus mindestens zwei Metallprofilen sowie
einem in einen zwischen diesen Metallprofilen vorgesehenen Freiraum eingebrachten Isoliermaterial, wobei
die Metallprofile während des in flüssiger Form erfolgenden Einbringens des anschließend erhärtenden Isoliermaterials in einem rinnenförmigen Führungsprofil gehalten und der zwischen den Metallprofilen befindliche
Freiraum nach unten hin abgedichtet wird.

Aus der DE-AS 22 26 445 ist eine Vorrichtung bekannt,
die ein rinnenförmiges Führungsprofil zur Aufnahme der
beiden das Verbundprofil ergebenden Metallprofile

- 2 -

verwendet. In diesem rinnenförmigen Führungsprofil wird
der von den Metallprofilen gebildete Freiraum vor dem
Einbringen des flüssigen Isoliermaterials an seinen
offenen Längsseiten mit Abdeckleisten verschlossen. Dabei dient die obere Abdeckleiste gleichzeitig dazu, die
Metallprofile auf der unteren Abdeckleiste festzupressen,
um eine ausreichende Abdichtung des zwischen den Metallprofilen vorhandenen Freiraumes zu erzielen. Der hierfür
notwendige Anpreßdruck wird mit Exzenterteilen erzeugt,
die von einem dem Führungsprofil zugeordneten seitlichen
Galgen aus auf die obere Abdeckleiste einwirken.

Verständlicherweise stellen die Exzenterteile oder andere ähnliche Spanneinrichtungen einen recht erheblichen
baulichen Aufwand dar, zumal für jeden vorkommenden
Verbundprofilquerschnitt jeweils eine dessen Abmessungen
entsprechende andere Vorrichtung zum Einsatz gelangen
muß, oder ständig wiederkehrende Umbaumaßnahmen zum
Anpassen der Vorrichtungen an die unterschiedlichen
Profilquerschnitte erforderlich sind. Die Folge davon
ist entweder der Bedarf an zahlreichen mit Spanneinrichtungen versehenen Führungsprofilen, oder es ergeben sich
bei jedem Profilwechsel erhebliche Montage- und Umrüstzeiten. Beides ist aber nur dann vertretbar, wenn hinreichend große Stückzahlen der verschiedenen Verbundprofile herzustellen sind. Für eine Fertigung üblichen
Umfanges kommt die bekannte Vorrichtung demnach wegen zu
hoher Kosten nicht in Betracht. Dasselbe gilt auch für
andere, beispielsweise der DE-OS 21 29 964, der DE-OS
23 05 873 und der DE-OS 27 05 870 zu entnehmende Einrichtungen.

Beim vorgenannten Stand der Technik liegt der Erfindung
die Aufgabe zugrunde, ein möglichst einfaches Verfahren
zum Herstellen von wärmeisolierenden Verbundprofilen zu
schaffen, das auch die wirtschaftliche Fertigung von in
kleineren Stückzahlen auftretenden Querschnittsformen gestattet. In diesem Zusammenhang soll der maschinelle Aufwand weitgehend eingeschränkt werden, damit daraus folgende hohe Anlagekosten sowie teuere Umrüstarbeiten
entfallen.

Eine weitere Aufgabe der Erfindung ist es, im Falle von
großen Profilquerschnitten das flüssige Isoliermaterial
so in den Freiraum zwischen die Metallprofile einzubringen, daß es diese nur brückenförmig miteinander verbindet.
Dadurch soll einesteils die benötigte Materialmenge verringert und andererseits im Isolierabschnitt ein dessen
Wirksamkeit erhöhender Hohlraum geschaffen werden.

Zur Lösung der gestellten Aufgaben werden das in den Ansprüchen gekennzeichnete Verfahren und die zu seiner Durchführung dienende Vorrichtung vorgeschlagen. Damit gelingt es nun, wärmeisolierende Verbundprofile in der angestrebten Weise vorwiegend in Handfertigung sowie kostengünstiger herzustellen, als es mit vom Bedarf her nicht auszulastenden aufwendigen Maschinen der Fall wäre. Außerdem gewährleistet der zum Verschließen der Längsöffnungen des zwischen den Metallprofilen vorhandenen Freiraumes verwendete selbstklebende Abdeckstreifen eine vollkommene Dichtwirkung, die sich bei immer erneut zum Einsatz gelangenden und somit einem erheblichen Verschleiß unterliegenden Abdeckleisten nicht erreichen läßt. Ferner wird das Reinigen sowie das Behandeln mit Antihaftmitteln solcher mit den flüssigen Isoliermaterialien in Berührung kommender Abdeckleisten eingespart.

Ausführungsbeispiele der Erfindung werden an Hand der Zeichnungen beschrieben. Darin zeigen im einzelnen:

Fig. 1 - 4    den schrittweisen Ablauf eines erfindungsgemäßen Herstellungsverfahrens für wärmeisolierende Verbundprofile,

Fig. 5    eine Vorrichtung zur Durchführung des in Fig. 4 erläuterten Verfahrensschrittes, und

Fig. 6 - 12    den Gang eines besonders für große Profilquerschnitte bestimmten ähnlichen Fertigungsablaufs.

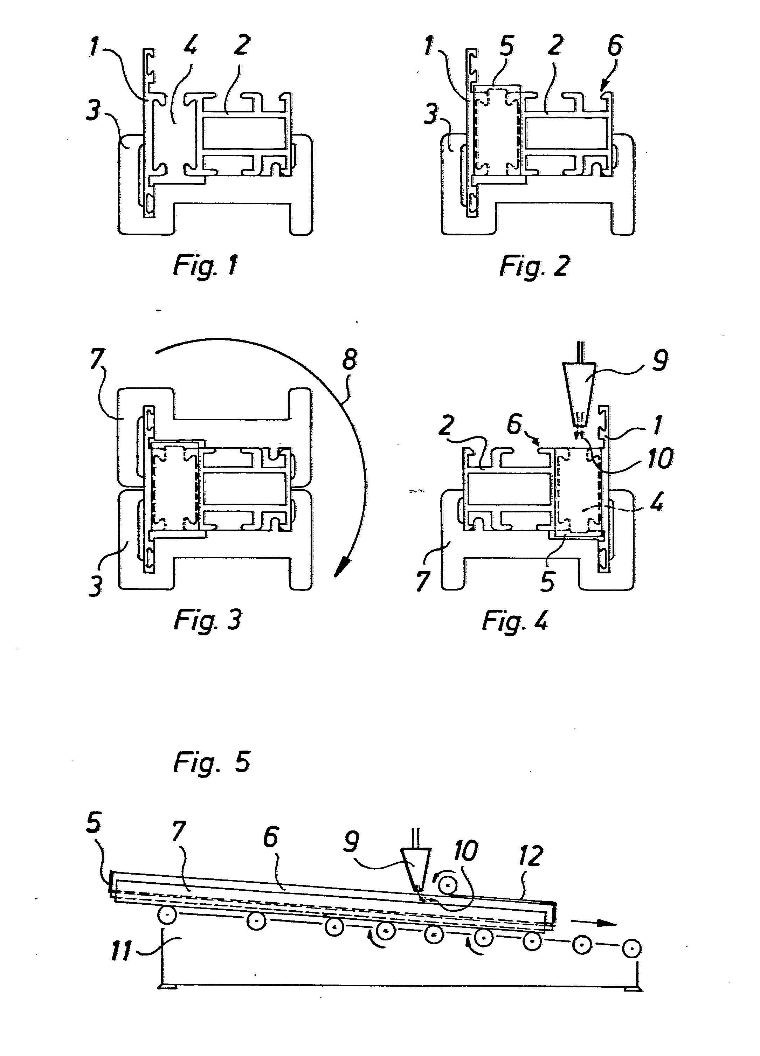

Wie aus Fig. 1 hervorgeht, werden zu Beginn des Herstellungsverfahrens zwei in der Stirnansicht abgebildete
Metallprofile 1 und 2 in eine gleichfalls von der Stirnseite her gesehene Halterung 3 so eingelegt, daß die
Halterung 3 die Metalprofile 1/2 unter Bildung eines die
zwischen ihnen liegende Isolierzone ergebenden Freiraumes
4 abstützt. Anschließend wird der Freiraum 4 gemäß Fig. 2
sowohl von oben her als auch an den Enden der Metallprofile 1/2 mit einem selbstklebenden Abdeckstreifen 5
verschlossen. Auf diese dann bereits lose zu einem Verbundprofil 6 zusammengefügten Metallprofile 1/2 wird ein
in Fig. 3 wiedergegebenes, mit der Halterung 3 querschnittsgleiches rinnenförmiges Führungsprofil 7 aufgestülpt und ebenso nach Fig. 3 in der Längsachse in Richtung des Pfeiles 8 um 180° gedreht. Als Folge davon
gelangt das Führungsprofil 7 wie in Fig. 4 dargestellt
nach unten, woraufhin die nun oben liegende, mit dem
Führungsprofil 7 querschnittsgleiche Halterung 3 ihren
Zweck erfüllt hat und deshalb von den Metallprofilen 1/2
abgenommen werden kann.

Nach Erreichen des aus Fig. 4 ersichtlichen Zustandes kann mit Hilfe einer Düse 9 das Einbringen des sich
zunächst noch in flüssiger Form befindlichen Isoliermaterials 10 an der jetzt nach oben gerichteten offen
gebliebenen Längsseite des Freiraumes 4 erfolgen. Das
zwischen die Metallprofile 1/2 einfließende und schnell
erhärtende Isoliermaterial 10 wird vom Abdeckstreifen 5
zu einem die Metallprofile 1 und 2 fest miteinander
verbindenden Block geformt, der bei Verwendung des so
hergestellten Verbundprofils 6 im Tür- und Fensterbau
den Kälteübergang von dessen Außenschale zur Innenschale erschwert.

Am Schluß des beschriebenen Verfahrensablaufs wird das
fertige Verbundprofil 6 dem Führungsprofil 7 entnommen
und muß dabei seine endgültige Querschnittsbreite aufweisen. Um die Entnahme des Verbundprofils 6 aus dem Führungsprofil 7 zu erleichtern, sollte diese Querschnittsbreite zweckmäßigerweise etwas geringer als die Rinnenbreite des Führungsprofils 7 sein, was sich dadurch erreichen läßt, daß das Isoliermaterial 10 beim Erhärten
eine genau vorzubestimmende Schrumpfung erfährt.

Gemäß Fig. 5 kann das Einbringen des Isoliermaterials 10
erfolgen, indem das rinnenförmige Führungsprofil 7 mit
den darin befindlichen Metallprofilen 1 und 2 auf einer in ihrer Längsrichtung geneigten Rollenbahn 11 unter der dann feststehend montierten Düse 9 in Pfeilrichtung hindurchgeschoben wird. Hierbei ist es möglich, der Düse 9 einen zweiten selbstklebenden Abdeckstreifen 12 nachzuführen und damit das eingefüllte Isoliermaterial 10 zusätzlich noch von oben her abzudecken. Dieser zweite Abdeckstreifen 12 kann wie der zuerst den Metallprofilen 1 und 2 aufgeklebte Abdeckstreifen 5 durch entsprechende Querschnittsgestaltung dem Isoliermaterial 10 eine gegenüber den angrenzenden Wandflächen der Metallprofile 1 und 2 erhabene Oberfläche vermitteln. Damit sollen Feuchtigkeitsansammlungen zwischen den isolierend miteinander verbundenen Metallprofilen 1/2 sowie das Auftreten sich hieraus ergebender Kältebrücken vermieden werden. Ebenso ließe sich mit geeignet ausgebildeten Abdeckstreifen 5 oder 12 die Oberfläche des über die angrenzenden Wandflächen der Metallprofile 1/2 hinausragenden Teiles des Isoliermaterials 10 noch zusätzlich als Wasserführung profilieren, um gegebenenfalls in das Verbundprofil 6 eindringendes Wasser vorzugsweise nach seiner Außenseite hin abzuleiten.

In zweckmäßiger Weiterbildung der Erfindung könnte es angebracht sein, die Halterung 3 und das Führungsprofil 7 jeweils als Mehrfachrinnen auszubilden. Auf diesem Wege wäre es möglich, bei jedem Arbeitsgang mindestens zwei Verbundprofile 6 gleichzeitig herzustellen, was den Fertigungsvorgang erheblich beschleunigen würde.

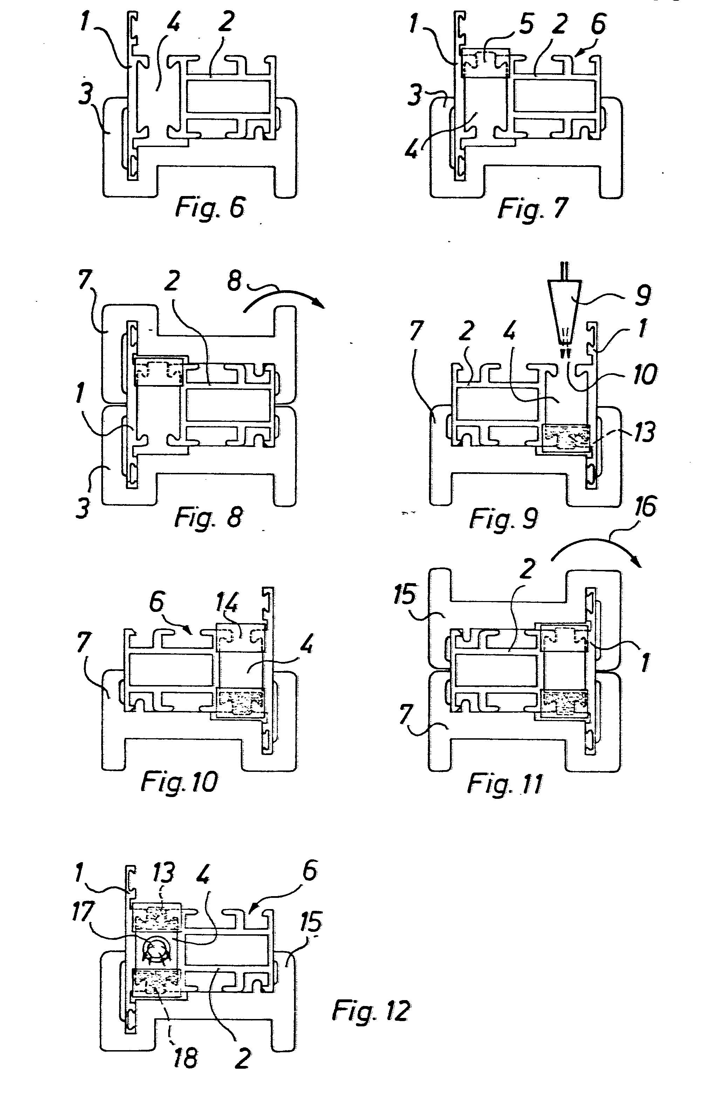

Ein hauptsächlich für große Profilquerschnitte in Frage kommender Fertigungsablauf ist in den Fig. 6 bis 12 dargestellt. Hierbei stimmen die Fig. 6, 7 und 8 weitgehend mit den Fig. 1 bis 3 überein, so daß auf deren nochmalige Erläuterung verzichtet und auf die entsprechende Textstelle verwiesen werden kann. Erst bei Fig. 9 ergibt sich insofern ein wesentlicher Unterschied, als mit Hilfe der Düse 9 das Einbringen des sich zunächst in flüssiger Form befindlichen Isoliermaterials 10 nur zu einer den Freiraum 4 teilweise füllenden Schicht 13 an der jetzt nach oben gerichteten offen gebliebenen Längsseite des Freiraumes 4 erfolgt. Daraufhin wird gemäß Fig. 10 auch die bisher noch offene Längsseite des Freiraumes 4 mit einem selbstklebenden Abdeckstreifen 14 verschlossen.

Aus Fig. 11 ist sodann ersichtlich, wie den Metallprofilen 1 und 2 erneut ein rinnenförmiges Führungsprofil 15, bei dem es sich auch um die Halterung 3 der Fig. 6 bis 8 handeln könnte, aufgestülpt und beide Führungsprofile 7 und 15 zusammen mit den Metallprofilen 1/2 in Richtung des Pfeiles 16 abermals um 180° gedreht werden. Dadurch gelangt das Führungsprofil 15 nach unten, und das Führungsprofil 7 wird von dem Verbundprofil 6 abgenommen,
wie es dem in Fig. 12 gezeigten Zustand entspricht. Zusätzlich wird stirnseitig in den Freiraum 4 eine Gießlanze 17 eingeführt und mit ihrer Hilfe ein zweiter
Verbindungssteg 18 aus Isoliermaterial 10 zwischen den
Metallprofilen 1 und 2 hergestellt.

Das nach Abschluß des beschriebenen Verfahrens dem Führungsprofil 15 zu entnehmende Verbundprofil 6 weist nun
für seine Verwendung im Tür- und Fensterbau bezüglich des
Kälteüberganges sehr günstige Eigenschaften auf, da die
Metallprofile 1 und 2 nur durch die aus Isoliermaterial
10 gebildete Schicht 13 und den zweiten Verbindungssteg
18 miteinander verbunden sind. Der zwischen beiden vorhandene Hohlraum führt zu besonders guten Isolierwerten
und zu Einsparungen an Isoliermaterial 10.

Eine mögliche Abwandlung des geschilderten Verfahrensablaufs kann darin bestehen, daß auch die Schicht 13
mit der Gießlanze 17 hergestellt wird, indem die Gießlanze 17 bereits zu einem der aus den Fig. 10 und 11
hervorgehenden Zeitpunkte stirnseitig in den Freiraum 4
eingeführt und mit ihr unter Wegfall der Düse 9 erstmalig Isoliermaterial 10 in den Freiraum 4 eingebracht

0015536
55/479

wird. Der in Fig. 11 angegebene Drehvorgang müßte dabei um die Gießlanze 17 herum erfolgen, aber diese könnte sich eventuell sogar auch schon früher im Freiraum 4 befinden, wobei sie dann ebenso die Achse für den Drehvorgang der Fig. 8 abgeben würde.

DIPL.-ING. H.-J. HENTZSCHEL
Patentingenieur
497 Bad Oeynhausen
Am Hohen Ufer 8     Telefon 29226

Manfred Mühle, Tulpenstraße 11, D-4972 Löhne 2

Verfahren und Vorrichtung zum Herstellen von wärmeisolierenden Verbundprofilen sowie nach dem Verfahren
hergestelltes Verbundprofil

A n s p r ü c h e :

1. Verfahren und Vorrichtung zum Herstellen von wärmeisolierenden Verbundprofilen, bestehend aus mindestens zwei Metallprofilen sowie einem in einen
   zwischen diesen Metallprofilen vorgesehenen Freiraum
   eingebrachten Isoliermaterial, wobei die Metallprofile während des in flüssiger Form erfolgenden
   Einbringens des anschließend erhärtenden Isoliermaterials in einem rinnenförmigen Führungsprofil gehalten und der zwischen den Metallprofilen befindliche Freiraum nach unten hin abgedichtet wird,
   dadurch gekennzeichnet, daß

a) die Metallprofile (1/2) in eine sie unter Bildung
des für die Aufnahme des Isoliermaterials (10)
bestimmten Freiraumes (4) abstützende Halterung
(3) eingelegt werden,

b) der Freiraum (4) sowohl von oben her als auch an
den Enden der Metallprofile (1/2) mit einem auf
den Metallprofilen (1/2) selbstklebenden Abdeckstreifen (5) verschlossen wird,

c) den Metallprofilen (1/2) das rinnenförmige Führungsprofil (7) aufgestülpt wird,

d) das rinnenförmige Führungsprofil (7) mit den
Metallprofilen (1/2) sowie deren Halterung (3)
in der Längsachse um etwa 180° gedreht wird,

e) die im Anschluß an den Drehvorgang oben liegende
Halterung (3) von den Metallprofilen (1/2) abgenommen wird,

f) das sich in flüssiger Form befindliche Isoliermaterial (10) an der offenen Seite des Freiraumes (4) in diesen eingebracht wird, und

g) nach dem Erhärten des Isoliermaterials (10) das
Verbundprofil (6) dem Führungsprofil (7) entnommen wird.


2. Verfahren und Vorrichtung nach Anspruch 1, dadurch
gekennzeichnet, daß als Halterung (3) zum Einlegen und Abstützen der Metallprofile (1/2) ein mit dem rinnenförmigen Führungsprofil (7) querschnittsgleiches Profil Verwendung findet.

3. Verfahren und Vorrichtung nach Anspruch 1 oder 2, dadurch gekennzeichnet, daß das Führungsprofil (7) und gegebenenfalls auch das als Halterung (3) Verwendung findende querschnittsgleiche Profil jeweils eine die gleichzeitige Fertigung von mindestens zwei Verbundprofilen (6) ermöglichende Mehrfachrinne darstellen.

4. Verfahren und Vorrichtung nach einem der Ansprüche 1 bis 3, dadurch gekennzeichnet, daß das die Metallprofile (1/2) zum Einbringen des Isoliermaterials (10) haltende Führungsprofil (7) während des Einbringens des Isoliermaterials (10) in Längsrichtung geneigt und unmittelbar hinter der das Isoliermaterial (10) zwischen die Metallprofile (1/2) einbringenden Düse (9) der mit Isoliermaterial (10) gefüllte Freiraum (4) mit einem der Düse (9) nachgeführten zweiten Abdeckstreifen (12) geschlossen wird.

5. Verfahren und Vorrichtung nach einem der Ansprüche 1 bis 4, dadurch gekennzeichnet, daß der bzw. die zum

- 4 -

Verschließen des zwischen den Metallprofilen (1/2)
gebildeten Freiraumes (4) dienenden selbstklebenden
Abdeckstreifen (5/12) durch entsprechende Querschnittsgestaltung dem in den Freiraum (4) eingebrachten Isoliermaterial (10) eine gegenüber den angrenzenden Wandflächen der Metallprofile (1/2) erhabene Oberfläche vermitteln.

6. Verfahren und Vorrichtung nach Anspruch 5, dadurch
gekennzeichnet, daß die Oberfläche des über die angrenzenden Wandflächen der Metallprofile (1/2)
hinausragenden Teiles des Isoliermaterials (10) vom
jeweiligen Abdeckstreifen (5 bzw. 12) profiliert
wird.

7. Verfahren und Vorrichtung nach einem der Ansprüche 1
bis 6, dadurch gekennzeichnet, daß das von dem
zwischen den Metallprofilen (1/2) befindlichen Freiraum (4) aufgenommene Isoliermaterial (10) beim Erhärten eine die Entnahme des Verbundprofils (6) aus
dem Führungsprofil (7) erleichternde, in ihrer Auswirkung auf die Abmessungen des Verbundprofils (6)
vorbestimmte Schrumpfung erfährt.

8. Verfahren und Vorrichtung nach einem der Ansprüche 1 bis 3 und 5 bis 7, dadurch gekennzeichnet, daß mit dem in den seitlich von den Metallprofilen (1/2) begrenzten Freiraum (4) einzubringenden Isoliermaterial (10) zunächst nur eine den Freiraum (4) teilweise füllende und insofern nach dem Erhärten des Isoliermaterials (10) die Metallprofile (1/2) miteinander verbindenden Steg ergebende Schicht (13) gebildet wird, anschließend der Freiraum (4) auf seiner vorher unverschlossen gebliebenen Seite ebenfalls mit einem auf den Metallprofilen (1/2) selbstklebenden Abdeckstreifen (14) geschlossen, den Metallprofilen (1/2) nochmals ein rinnenförmiges Führungsprofil (15) aufgestülpt sowie ein erneuter etwa 180° betragender Drehvorgang um dessen Längsachse vorgenommen und mit Hilfe einer stirnseitig in den Freiraum (4) einführbaren Gießlanze (17) oder dergleichen ein zweiter Verbindungssteg (18) zwischen den beiden Metallprofilen (1/2) aus nachfolgend wiederum erhärtendem flüssigen Isoliermaterial (10) hergestellt wird.

Fig. 1

Fig. 2

Fig. 3

Fig. 4

Fig. 5

2/2

0015536

Fig. 6

Fig. 7

Fig. 8

Fig. 9

Fig. 10

Fig. 11

Fig. 12

Europäisches Patentamt

# EUROPÄISCHER RECHERCHENBERICHT

0015536

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 239 637 (SCHAERER)<br>* Seite 4, Zeilen 19-27; Seite 5, Zeilen 1-16; Seite 6, Zeilen 11-25; Seite 8, Zeilen 1-31; Seite 9, Zeilen 1-15; Seite 10, Zeilen 1-10; Figuren 4-6 *<br>-- | 1,4 |
| A | DE - A - 2 639 966 (KOPPEN)<br>* Seite 8, Absätze 2,3; Seite 9, Absatz 1; Seite 11, Absatz 4; Seite 12, Absätze 1-3; Seite 13, Absätze 1,2; Figur 1 *<br>-- | 1,4 |
| | DE - B - 1 174 483 (ERBSLOH)<br>* Spalte 2, Zeilen 28-40; Spalte 4, Zeilen 35-64; Figuren 2,3 *<br>-- | 1 |
| A | FR - A - 2 393 133 (PECHINEY)<br>* Seite 4, Zeilen 9-14; Seite 5, Zeilen 1-9; Anspruch 1; Figuren 1-5 *<br>-- | 1,2 |
| A | DE - A - 2 615 938 (HUECK)<br>* Seite 5, Absätze 1-4; Figuren 1,2 *<br>-- | 1,4 |
| A | FR - A - 2 191 577 (GREGOIRE)<br>* Seite 1, Zeilen 8-20; Seite 2, Zeilen 21-32; Figur 3 *<br>-- ./. | 4 |

### KLASSIFIKATION DER ANMELDUNG (Int.Cl. 3)

E 06 B 3/26
B 29 D 27/04

### RECHERCHIERTE SACHGEBIETE (Int. Cl. 3)

E 06 B
B 29 D

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-06-1980 | DEPOORTER |

EPA form 1503.1   06.78

| | **EINSCHLÄGIGE DOKUMENTE** | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | <u>FR - A - 2 390 575</u> (HUECK)<br><br>* Seite 6, Zeilen 22-37; Seite 7, Zeilen 1-9; Seite 8, Zeilen 11-18; Anspruch 1; Figuren 1-6 *<br><br>-- | 8 | |
| PA | <u>DE - A - 2 801 149</u> (HUECK)<br><br>* Seite 6, Absätze 3-6; Seite 7, Absätze 1-3; Seite 8, Absätze 1,2; Seite 9, Absatz 3; Seite 10, Absatz 1; Figuren 1-4 *<br><br>---- | 8 | RECHERCHIERTE SACHGEBIETE (Int. Cl. 3) |